(19) Europäisches Patentamt

European Patent Office

Office européen des brevets

(11) **EP 0 939 363 B1**

(12) **FASCICULE DE BREVET EUROPEEN**

(45) Date de publication et mention
de la délivrance du brevet:
**13.06.2001 Bulletin 2001/24**

(51) Int Cl.⁷: $G06F\ 7/72$, $G06F\ 7/52$

(21) Numéro de dépôt: **99470005.2**

(22) Date de dépôt: **17.02.1999**

(54) **Procédé de mise en oeuvre d'une multiplication modulaire selon la méthode de Montgoméry**

Verfahren zur Ausführung der modularen Multiplikation nach der Montgomery-Methode

Method for implementing modular multiplication according to the Montgomery method

(84) Etats contractants désignés:
**DE FR GB IT**

(30) Priorité: **26.02.1998 FR 9802500**

(43) Date de publication de la demande:
**01.09.1999 Bulletin 1999/35**

(73) Titulaire: **STMicroelectronics SA**
**94250 Gentilly Cedex (FR)**

(72) Inventeur: **Romain, Fabrice**
**57000 Metz (FR)**

(74) Mandataire: **Ballot, Paul Denis Jacques**
**Cabinet Ballot**
**9 Rue Claude Chappé**
**57070 Metz (FR)**

(56) Documents cités:
**EP-A- 0 601 716      EP-A- 0 793 165**
**EP-A- 0 853 275      US-A- 4 807 175**
**US-A- 5 121 431**

• **ARAZI B: "DOUBLE-PRECISION MODULAR MULTIPLICATION BASED ON A SINGLE-PRECISIONMODULAR MULTIPLIER AND A STANDARD CPU" IEEE JOURNAL ON SELECTED AREAS IN COMMUNICATIONS, vol. 11, no. 5, 1 juin 1993, pages 761-769, XP000399844**

Remarques:
Le dossier contient des informations techniques présentées postérieurement au dépôt de la demande et ne figurant pas dans le présent fascicule.

## Description

L'invention concerne un procédé de mise en oeuvre d'une multiplication modulaire spécifique relative à la méthode de Montgomery. Plus précisément, l'invention concerne l'amélioration du séquencement d'un coprocesseur d'arithmétique modulaire permettant de réaliser des opérations modulaires selon la méthode de Montgomery, afin d'étendre les possibilités d'un dispositif comportant un tel processeur.

La méthode de Montgomery permet d'effectuer des calculs modulaires dans un corps fini $GF(2^n)$ (corps de Galois) sans effectuer de division.

Classiquement, les opérations modulaires sur $GF(2^n)$ sont utilisées en cryptographie pour des applications telles que l'authentification de messages, l'identification d'un utilisateur et l'échange de clés. De tels exemples d'applications sont décrits par exemple dans un document DI correspondant à la demande de brevet FR-A-2 679 054.

On trouve dans le commerce des circuits intégrés dédiés à de telles applications, par exemple le produit fabriqué par la société SGS-THOMSON Microelectronics et portant la référence ST16CF54, bâti autour d'une association de type unité centrale - coprocesseur arithmétique, et dédié à la mise en oeuvre de calculs modulaires. Le coprocesseur utilisé permet de traiter des opérations modulaires en utilisant la méthode de Montgomery. Il fait l'objet de la demande de brevet EP-A-0 601-907 que l'on appellera par la suite le document D2.

L'opération de base de Montgomery (appelée Pfield) mise en oeuvre par ce coprocesseur consiste, à partir de trois données binaires A (multiplicande), B (multiplieur), et N (modulo), codées sur un nombre entier n de bits, à produire une donnée binaire $P_{field}(A, B)_N$ codée sur n bits, telle que $P_{field}(A, B)_N = A * B * I \bmod N$. I est une donnée binaire, appelée erreur, codée sur n bits tels que $I = 2^{-n} \bmod N$ (plus précisément, la valeur de I dépend du nombre de blocs de k bits considérés pour le codage de A, k étant un entier). Pour réaliser l'opération $A * B * I \bmod N$, on considère que les données sont codées sur m mots de k bits (m et k étant des nombres entiers), avec $m * k = n$.

Dans le document D2, le coprocesseur travaille avec $k = 32$ et $m = 8$ ou 16. Le coprocesseur de D2 peut être utilisé pour produire le résultat de la multiplication modulaire $A * B \bmod N$. La multiplication modulaire se décompose en deux opérations élémentaires Pfield successives. On calcule $P_{field}(P_{field}(A, B)_N, H)_N$, avec H une donnée codée sur -n bits, appelée paramètre de correction d'erreur, et égale à $2^{2n} \bmod N$. Pour de plus amples détails sur la mise en oeuvre de la multiplication modulaire, on pourra se reporter au document D2.

L'utilisation du coprocesseur de D2 permet d'optimiser (en terme de durée de calcul, de taille mémoire, etc.) le traitement d'opérations modulaires utilisant une taille de donnée fixée, en l'occurrence 256 ou 512 bits. Or, la cryptographie nécessite des machines de plus en plus performantes, travaillant de plus en plus vite et utilisant des clefs de plus en plus complexes. On s'oriente ainsi vers la manipulation de données codées sur 768, 1024, 1536 et même 2048 bits. Pour traiter de telles données, on peut envisager de réaliser des circuits de dimensions plus importantes en adaptant les éléments du circuit aux tailles des données. Cette solution peut poser des problèmes dans des applications telles que les cartes à puce pour lesquelles la taille des circuits est physiquement limitée à cause des différences de contrainte mécanique de flexion entre carte et substrat de silicium. De plus, il est demandé d'intégrer de plus en plus d'éléments fonctionnels différents sur une telle carte et la place disponible pour un circuit de cryptage en est d'autant plus réduite. Il faut donc trouver des solutions permettant de limiter l'augmentation de la taille de ce circuit, tout en permettant de fonctionner de manière optimum pour des données de taille supérieure à la taille des registres prévus initialement.

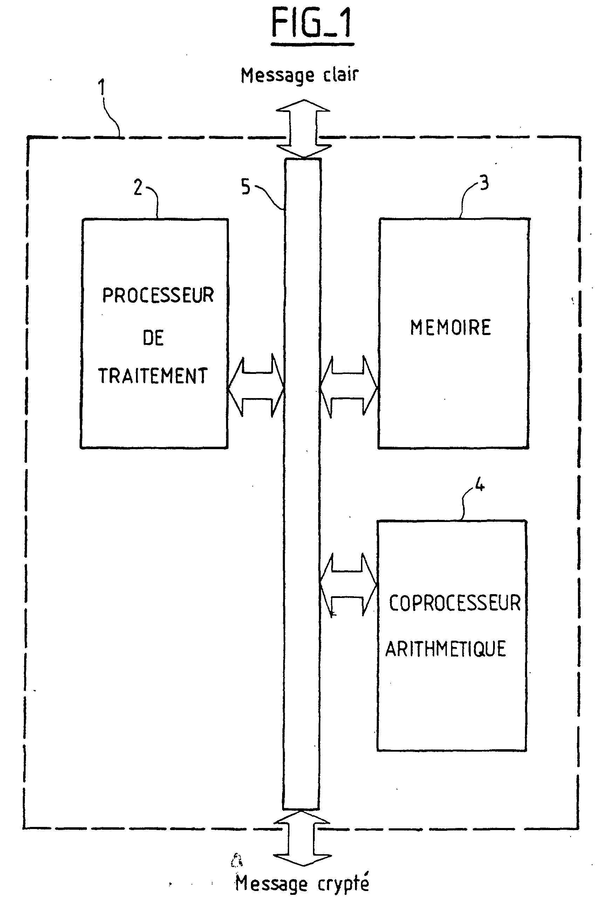

Pour réaliser des opérations modulaires utilisant des opérandes d'une taille supérieure à ce que gère le coprocesseur (c'est-à-dire en pratique de la taille maximale des registres), on peut utiliser le circuit 1 représenté sur la figure 1 qui comporte un processeur classique 2 (8, 16, ou 32 bits), une mémoire 3, un coprocesseur 4, et un bus de communication 5 servant à relier les différents éléments 2, 3 et 4 ensemble et/ou à l'extérieur du circuit 1. Dans le circuit 1 de la figure 1, le coprocesseur 4 est alors utilisé comme multiplieur travaillant sur $m * k$ bits (classiquement 256 ou 512 bits). Le processeur 2 sert à superviser notamment les opérations à réaliser suivant un algorithme de cryptage particulier et les échanges de données entre la mémoire 3 et le coprocesseur 4.

Or la réalisation de l'opération de base des calculs modulaires selon la méthode de Montgomery, dite $P_{field}$, consiste, à partir de trois données binaires A (multiplicande), B (multiplieur) et N (modulo), codées sur un nombre entier n de bits, à produire une donnée binaire notée $P(A, B)N$ codée sur n bits, telle que $P(A, B)_N = A * B * I \bmod N$, I étant une erreur due à la méthode de Montgomery. Dans le cas où n est de taille supérieure à la taille des registres, c'est à dire $m * k$, il convient de décomposer n en p mots de Bt bits, Bt étant une base de travail de taille inférieure ou égale à $m * k$, par exemple $m * k$. La méthode de Montgomery se déroule ainsi, i étant un indice variant de 0 à m - l, on répète m fois la boucle de calcul suivante:

$$X = S_i + A_i * B,$$

$$Y_0 = (X * J_0) \bmod 2^{Bt},$$

$$Z = X + (N * Y_0),$$

$S_{i+1} = Z \setminus 2^{Bt}$, \ étant une division entière,
si $S_{i+1}$ est supérieur à N alors on soustrait N à $S_{i+1}$,
$A_i$ correspondant à un mot de Bt bits de la décomposition de A, et
$S_i$ correspondant à un résultat actualisé de l'opération $P_{field}$ et $S_m = P(A, B)_N = A * B * I \bmod N$.

Un tel procédé de calcul nécessite un grand nombre d'échanges de données entre le coprocesseur 4 et la mémoire 3 et nécessite un dimensionnement de la mémoire 3 en fonction des données à mémoriser lors des calculs intermédiaires. Dans la demande de brevet EP-A-0 793 165, appelée par la suite D3, il est expliqué comment faire des multiplications non modulaires et des opérations du type S = A * B + C ou S = A * B + C + D, dans lesquelles A, B, C et D sont codées sur Bt bits avec Bt égal au plus à m * k, S étant codé sur 2 * Bt bits.
Si l'on développe l'algorithme de Montgomery réalisé à partir d'opérations élémentaires de type S = A * B + C + D, on obtient la répétition de la boucle de calcul suivante:

A) calcul de $X = S_i + A_i * B$, soit:
$X_p...X_0 = S_{i,p-1}... S_{i,0} + A_i * B_{p-1}...B_0$, avec $X_j$, $S_{i,j}$ et $B_j$ les mots de Bt bits de X, $S_i$ et B, à l'aide de la succession des p calculs suivants réalisés dans le coprocesseur 4:

```
A1)    X'₁X₀ = Sᵢ,₀ + Aᵢ * B₀ + 0
A2)    X'₂X₁ = Sᵢ,₁ + Aᵢ * B₁ + X'₁
...    ...
Ap-1) X'p-1Xp-2 = Sᵢ,p-2 + Aᵢ * Bp-2 + X'p-2
Ap)    XpXp-1 = Sᵢ,p-1 + Aᵢ * Bp-1 + X'p-1
```

avec $X'_1$ à $X'_{p-1}$ des mots de Bt bits de calculs intermédiaires qui restent en permanence dans le coprocesseur 4;
B) $Y_0 = (X * J_0) \bmod 2^{Bt}$, soit:
$Y_0 = (X_p...X_0 * J_0) \bmod 2^{Bt}$, par le calcul suivant réalisé dans le coprocesseur 4:

$$Y'_1Y_0 = 0 + X_0 * J_0 + 0$$

le mot de poids faible $Y_0$ étant le seul intéressant;
C) $Z = X + N * Y_0$, soit:
$Z_p...Z_0 = X_p...X_0 + Y_0 * N_{p-1}...N_0$, avec $Z_j$, $X_j$ et $N_j$ les mots de Bt bits de Z, X et N, à l'aide de la succession des p + 1 calculs suivants réalisés dans le coprocesseur 4:

```
C1)    Z'₁Z₀ = X₀ + Y₀ * N₀ + 0
C2)    Z'₂Z₁ = X₁ + Y₀ * N₁ + Z'₁
...    ...
Cp-1) Z'p-1Zp-2 = Xp-2 + Y₀ * Np-2 + Z'p-2
Cp)    Z'pZp-1 = Xp-1 + Y₀ * Np-1 + Z'p-1
Cp+1) Zp = Xp + 0 * 0 + Z'p
```

avec $Z'_1$ à $Z'_p$ des mots de Bt bits de calcul intermédiaire qui restent en permanence dans le coprocesseur 4;
D) $S_{i+1} = Z \setminus 2^{Bt}$, \ étant une division entière, si $S_{i+1}$ est supérieur à N alors on soustrait N à $S_{i+1}$.

On peut remarquer que le calcul de $Y_0 = (X * J_0) \bmod 2^{Bt}$, est réalisé à partir d'une opération non modulaire qui calcul $Y'_1 Y_0$. L'opération modulo $2^{Bt}$ se fait ensuite par abandon du mot de poids fort de Bt bits $Y'_1$. La mise en oeuvre du calcul de $Y_0$ revient à faire le calcul inutile de $Y'_1$.

L'invention propose de mettre en oeuvre l'opération $Y_0 = (X * J_0) \bmod 2^{Bt}$ de manière directe à l'intérieur du coprocesseur 4 afin de libérer un registre de Bt = m * k bits à l'intérieur du coprocesseur 4, le registre ainsi libéré permettant de mémoriser une donnée pendant le calcul de $Y_0$.

L'invention a pour objet un procédé de mise en oeuvre d'une opération modulaire du type $S = A * B \bmod 2^{m*k}$, A, B et S étant codés sur au plus m mots de k bits, m et k étant des entiers supérieurs à 1, procédé qui est défini dans la revendication 1.

L'invention porte également sur un coprocesseur d'arithmétique modulaire tel que defini dans la revendication 7.

Des modes de réalisation particuliers de l'invention sont spécifiés dans les revendications dépendantes attenantes.

Plus généralement, l'invention porte sur un circuit intégré mettant en oeuvre des opérations modulaires selon la méthode de Montgomery qui comporte un processeur, une mémoire et le coprocesseur de l'invention.

L'invention sera mieux comprise et d'autres particularités et avantages apparaîtront à la lecture de la description qui va suivre, la description faisant référence aux dessins annexés parmi lesquels:

la figure 1 représente un circuit 1 mettant en oeuvre des opérations modulaires sur des grands nombres,

les figures 2 et 3 représentent des coprocesseurs d'arithmétique modulaire mettant en oeuvre l'invention.

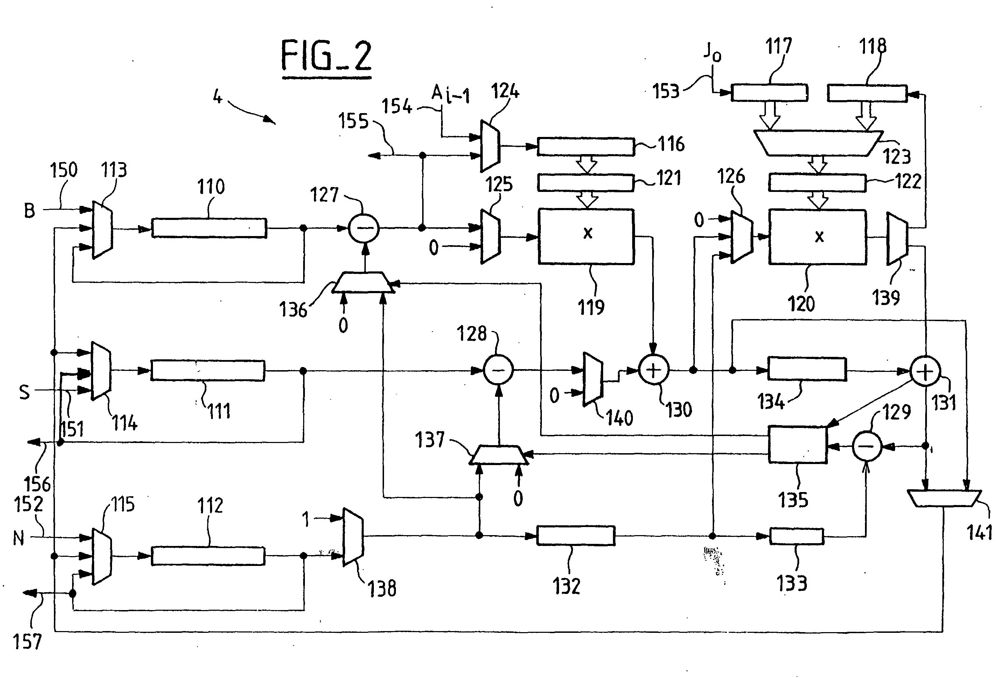

La figure 2 représente un coprocesseur 4 mettant en oeuvre l'invention. Le coprocesseur 4 de la figure 2 est dévoilé dans D3. Le coprocesseur 4 illustré sur la figure 2 comporte :

- trois registres à décalage 110, 111 et 112 à entrée série et sortie série, ces registres comportant un nombre n (n entier) de cellules, avec n = m * k (m et k entiers) ;
- un multiplexeur 113 comprenant trois entrées séries et une sortie série, la sortie série étant reliée à l'entrée du registre 110, la première entrée étant reliée à une première borne d'entrée 150, la deuxième entrée étant reliée à la sortie du registre 110;
- un multiplexeur 114 comprenant trois entrées séries et une sortie série, la sortie série étant reliée à l'entrée du registre 111, la première entrée étant reliée à une deuxième borne d'entrée 151, la troisième entrée étant reliée à la sortie du registre 111;
- un multiplexeur 115 comprenant trois entrées séries et une sortie série, la sortie série étant reliée à l'entrée du registre 112, la première entrée étant reliée à une troisième borne d'entrée 152, la deuxième entrée étant reliée à la sortie du registre 112;
- trois registres 116, 117 et 118 de k cellules comprenant une entrée série et une sortie parallèle, l'entrée du registre 117 étant reliée à une quatrième borne d'entrée 153;
- deux circuits 119 et 120 de multiplication comprenant une entrée série, une entrée parallèle pour recevoir k bits, et une sortie série;
- deux registres 121 et 122 de mémorisation de k cellules comprenant une entrée parallèle et une sortie parallèle, l'entrée du registre 121 étant reliée à la sortie du registre 116, la sortie du registre 121 étant reliée à l'entrée parallèle du circuit de multiplication 119, et la sortie du registre 122 étant reliée à l'entrée parallèle du circuit de multiplication 120;

- un multiplexeur 123 comprenant deux entrées parallèles et une sortie parallèle, la première entrée du multiplexeur 123 étant reliée à la sortie du registre 117, la deuxième entrée du multiplexeur 123 étant reliée à la sortie du registre 118, la sortie du multiplexeur 123 étant reliée à l'entrée du registre 122;
- deux multiplexeurs 124 et 125 comprenant chacun deux entrées séries et une sortie série, la sortie du multiplexeur 124 étant reliée à l'entrée du registre 116, la première entrée du multiplexeur 124 étant reliée à une cinquième borne d'entrée 154, la sortie du multiplexeur 125 étant reliée à l'entrée série du circuit de multiplication 119, la première entrée du multiplexeur 125 recevant un zéro logique;
- un multiplexeur 126 comprenant trois entrées séries et une sortie série, la sortie étant reliée à l'entrée série du circuit de multiplication 120, la première entrée recevant un zéro logique;
- des circuits 127, 128 et 129 de soustraction comprenant chacun deux entrées séries et une sortie série, la première entrée du circuit 127 étant reliée à la sortie du registre 110, la sortie du circuit 127 étant reliée à chacune des deuxièmes entrées des multiplexeurs 124 et 125 et également à une borne de sortie 155, la première entrée du circuit 128 étant reliée à la sortie du registre 111;
- un circuit 130 d'addition comprenant deux entrées séries et une sortie série, la première entrée du circuit 130 étant reliée à la sortie du circuit 119, la sortie du circuit 130 étant reliée à la deuxième entrée du multiplexeur 126;

- un circuit 131 d'addition comprenant deux entrées séries, une sortie série et une sortie de retenue, la sortie de retenue du circuit 131 étant reliée à la première entrée du circuit 129;

- des cellules à retard 132, 133 et 134 pour retarder de k temps de cycle la propagation de données binaires (ces cellules étant typiquement des registres à décalage de k bits), ces cellules comprenant une entrée série et une sortie série, la sortie de la cellule 132 étant reliée d'une part à la troisième entrée du multiplexeur 126 et d'autre part à l'entrée de la cellule 133, la sortie de la cellule 133 étant reliée à la deuxième entrée du circuit 129, l'entrée de la cellule 134 étant reliée à la sortie du circuit 130, et la sortie de la cellule 134 étant reliée à la première entrée du circuit 131;

- un circuit 135 de comparaison comprenant deux entrées séries et deux sorties, la première entrée étant reliée à la sortie du circuit 131, la deuxième entrée étant reliée à la sortie du circuit 129;

- deux multiplexeurs 136 et 137 comprenant chacun deux entrées séries, une entrée de sélection, et une sortie série, chacune des premières entrées recevant un zéro logique, chacune des entrées de sélection étant reliée à l'une des sorties du circuit 135, la sortie du multiplexeur 136 étant reliée à la deuxième entrée du circuit 127, la sortie du multiplexeur 137 étant reliée à la deuxième entrée du circuit 128;

- un multiplexeur 138 comprenant deux entrées séries et une sortie série, la première entrée recevant un "un" logique, la deuxième entrée étant reliée à la sortie du registre 112, la sortie étant reliée d'une part à l'entrée de la cellule 132 et d'autre part aux deuxièmes entrées des multiplexeurs 136 et 137;

- un démultiplexeur 139 comprenant une entrée série et deux sorties séries, l'entrée étant reliée à la sortie du circuit 120, les sorties étant reliées respectivement à l'entrée du registre 118 et à la deuxième entrée du circuit 131;

- un multiplexeur 140 comprenant deux entrées séries et une sortie série, la première entrée étant reliée à la sortie du circuit 128, la deuxième entrée étant reliée à un zéro logique, et la sortie étant reliée à la deuxième entrée du circuit 130;

- un multiplexeur 141 comprenant deux entrées séries et une sortie série, la première entrée étant reliée à la sortie du circuit 130, la deuxième entrée étant reliée à la sortie du circuit 131, et la sortie étant reliée aux troisièmes entrées des multiplexeurs 113 et 115 et à la deuxième entrée du multiplexeur 114;

- deux bornes de sortie 156 et 157 reliées respectivement aux sorties des registres 111 et 112.

Pour pouvoir réaliser les opérations modulaires et non modulaires citées précédemment, l'homme du métier peut se reporter entre autre à D2 et D3.

Pour mettre en oeuvre l'opération $S = A * B \bmod 2^{Bt}$, A, B et S étant codés sur Bt bits, Bt étant au plus égal à m * k bits, on manipule les opérandes A, B et S en les divisant en m sous-opérandes de k bits : $A_{m-1}...A_0$, $B_{m-1}...B_0$, $S_{m-1}...S_0$, l'indice 0 désignant le mot de poids le plus faible et l'indice m-1 désignant le mot de poids le plus fort. On notera que A et B pourront avoir en pratique des tailles différentes. On suppose ici, pour simplifier, que A et B ont la même taille. On procède de la manière suivante:

A) première initialisation:

on charge B dans le registre 110, on initialise à "0" le registre 111, on charge $A_0$ dans le registre 121 par l'intermédiaire du registre 116, on positionne de manière fixe les multiplexeurs 136 et 137 de manière à obtenir "0" en sortie afin de neutraliser les -circuits de soustraction 127 et 128, on positionne le multiplexeur 141 de manière fixe pour relier en permanence à sa sortie la sortie du circuit d'addition 130, on initialise les circuits d'addition 130 et de multiplication 119;

B) première itération

B1) on décale de m * k bits les contenus des registres 110 et 111 réalisant ainsi $A_0 * B$, les m mots de k bits de résultat en sortie du circuit d'addition correspondant à un résultat intermédiaire noté $R_0$ étant stockés dans le registre 111, $R_0$ étant décomposable en m mots de k bits $R_{0,m-1}$, $R_{0,m-2}$, ..., $R_{0,0}$, et l'entrée du registre 110 étant bouclée sur sa sortie;

B2) on décale de k bits le contenu du registre 111 en bouclant son entrée sur sa sortie, afin de placer le mot $R_{0,0}$ correspondant au mot $S_0$ en mot de poids fort dans ledit registre 111;

B3) on charge- dans le registre 116 le mot $A_1$ pendant le déroulement de l'étape B1 et/ou B2;

C) autres itérations: répétition des étapes C1 à C5 m-1 fois avec i un indice variant de 1 à m-1:

C1) on charge le mot $A_i$ dans le registre 121, on initialise les circuits d'addition 130 et de multiplication 119;

C2) on décale de (m - i) * k bits les contenus des registres 110 et 111 réalisant ainsi $A_i * B_{m-1-i}...B_0 + R_{i-1,m-i}... R_{i-1,1}$, les m - i mots de k bits de résultat en sortie du circuit d'addition correspondant à un résultat intermédiaire

noté $R_i$ qui est stocké dans le registre 111, $R_i$ étant décomposable en m - i mots de k bits $R_{i,m-i-1}$ à $R_{i,0}$, et l'entrée du registre 110 étant bouclée sur sa sortie;

C3) on décale de i * k bits le contenu des registres 110 et 111 en bouclant leurs entrées respectivement sur leurs sorties, afin de placer le mot $R_{i,0}$ dans ledit registre 111, et de replacer le mot B dans le registre 110 pour avoir son bit de poids faible prêt à sortir;

C4) on décale de k bits le contenu du registre 111 en bouclant son entrée sur sa sortie, afin de placer le mot $R_{i,0}$ correspondant au mot $S_i$ en mot de poids fort dans ledit registre 111, le registre 111 contenant, à l'issue du décalage, les i + 1 mots de poids faible de S ($S_i$ à $S_0$) rangés dans les (i + 1) * k cellules de poids fort du registre 111;

C5) on charge dans le registre 116 le mot $A_{i+1}$ pendant le déroulement d'au moins l'une des étapes C2 à C4 (excepté lorsque i est égal à m-1);

D) on peut disposer de S = A * 3 mod $2^{m*k}$ qui est contenu dans le registre 111 à l'issue de la réalisation des étapes précédentes.

Dans le cas où les données A et B ne sont pas d'une même taille multiple de k, on complète le poids fort de ces données par des "0" pour obtenir deux nombres de taille identique. On peut utiliser des registres configurables en registres de taille m' * k bits < m * k bits pour traiter des mots de taille inférieure, on utilisera alors le même procédé avec des registres de taille m' * k bits au lieu de m * k bits en remplaçant m par m' dans le procédé décrit précédemment.

On peut remarquer que le procédé énoncé précédemment utilise intelligemment le registre 111 de manière à mémoriser simultanément un résultat intermédiaire $R_i$ et les i + 1 mots du résultat final S (en effet, le mot $R_{i,0}$ correspond également au mot $S_i$), le résultat intermédiaire correspondant aux m - i mots de k bits de poids faible de la multiplication de B par $A_i$. Un tel procédé permet d'utiliser le registre 112 pour mémoriser ou de charger une autre donnée pendant la réalisation de l'opération S = A * B mod $2^{m*k}$.

De nombreuses variantes et améliorations sont possibles à partir de ce procédé de base. Ainsi, l'étape d'initialisation A) n'est pas une étape nécessaire si le coprocesseur 4 se trouve dans l'état correspondant à la fin de cette étape A) avant de commencer le calcul. De même, plusieurs chemins sont possibles pour réaliser les étapes B1 et C2, suivant que l'on désire shunter ou non la cellule à retard 134. Il est également possible d'utiliser ce procédé avec un coprocesseur disposant de quatre registres de m * k bits afin de mémoriser intégralement A dans le coprocesseur 4.

Une première amélioration consiste à utiliser des registres de m * k bits de taille variable par mots de k bits de manière à réduire le nombre de décalages à effectuer au cours de chaque itération. L'utilisation de registres de taille variable peut, par exemple, supprimer les étapes B2, C3 et C4 en faisant varier la taille des registres lors de chaque exécution de l'étape C2.

Une deuxième amélioration consiste à utiliser les deux circuits de multiplication 119 et 120 simultanément de manière à réduire le temps de calcul.

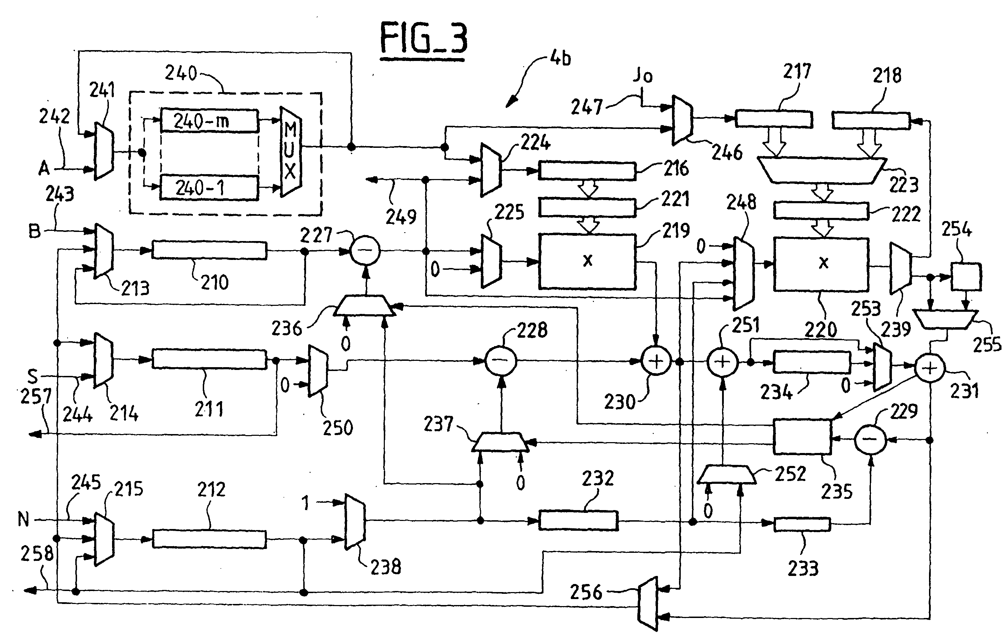

Le schéma de la figure 3 représente un coprocesseur selon l'invention qui permet de réaliser l'invention avec les améliorations citées précédemment. Il est toutefois possible de réaliser un coprocesseur selon l'invention qui n'utilise qu'une partie de ces améliorations en fonction des différentes contraintes de rapidité, de calcul et d'occupation de surface de silicium et des compromis possibles résultant de ces contraintes.

La figure 3 représente un exemple de coprocesseur 4b selon l'invention.

Le dispositif illustré sur la figure 3 comprend :

- quatre registres à décalage 210, 211, 212 et 240 à entrée série et sortie série, ces registres comportant un nombre n (n entier) de cellules, avec n = m * k (m et k entiers) ;
- un multiplexeur 241 comprenant deux entrées séries et une sortie série, la sortie série du multiplexeur 241 étant reliée à l'entrée du registre 240, une première entrée du multiplexeur 241 étant reliée à une première borne d'entrée 242 et une deuxième entrée du multiplexeur 241 étant reliée à la sortie du registre 240;
- un multiplexeur 213 comprenant trois entrées séries et une sortie série, la sortie série du multiplexeur 213 étant reliée à l'entrée du registre 210, une première entrée du multiplexeur 213 étant reliée à une deuxième borne d'entrée 243 et une deuxième entrée du multiplexeur 213 étant reliée à la sortie du registre 210;
- un multiplexeur 214 comprenant deux entrées séries et une sortie série, la sortie série du multiplexeur 214 étant reliée à l'entrée du registre 211, et une première entrée du multiplexeur 214 étant reliée à une troisième borne d'entrée 244;
- un multiplexeur 215 comprenant trois entrées séries et une sortie série, la sortie série du multiplexeur 215 étant reliée à l'entrée du registre 212, une première entrée du multiplexeur 215 étant reliée à une quatrième borne d'entrée 245 et une deuxième entrée du multiplexeur 215 étant reliée à la sortie du registre 212;
- trois registres 216, 217 et 218 de k cellules comprenant une entrée série et une sortie parallèle,
- un multiplexeur 246 comprenant deux entrées séries et une sortie série, la sortie série du multiplexeur 246 étant reliée à l'entrée du registre 217, une première entrée du multiplexeur 246 étant reliée à une cinquième borne d'entrée 247 et une deuxième entrée du multiplexeur 246 étant reliée à la sortie du registre 240;

- deux circuits 219 et 220 de multiplication comprenant une entrée série, une entrée parallèle pour recevoir k bits et une sortie série,
- deux registres 221 et 222 de mémorisation de k cellules comprenant une entrée et une sortie parallèles, l'entrée du registre 221 étant reliée à la sortie du registre 216, la sortie du registre 221 étant reliée à l'entrée parallèle du circuit de multiplication 219 et la sortie du registre 222 étant reliée à l'entrée parallèle du circuit de multiplication 220;
- un multiplexeur 223 comprenant deux entrées parallèles et une sortie parallèle, une première entrée du multiplexeur 223 étant reliée à la sortie du registre 217 et une deuxième entrée du multiplexeur 223 étant reliée à la sortie du registre 218, la sortie du multiplexeur 223 étant reliée à l'entrée du registre 222;
- deux multiplexeurs 224 et 225 comprenant chacun deux entrées séries et une sortie série, la sortie du multiplexeur 224 étant reliée à l'entrée du registre 216, une première entrée du multiplexeur 224 étant reliée à la sortie du registre 240, la sortie du multiplexeur 225 étant reliée à l'entrée série du circuit de multiplication 219 et une première entrée du multiplexeur 225 recevant un "0" logique;
- un multiplexeur 248 comprenant quatre entrées série et une sortie série, la sortie du multiplexeur 248 étant reliée à l'entrée série du circuit de multiplication 220 et une première entrée de ce multiplexeur recevant un "0" logique;
- des circuits de soustraction 227, 228 et 229 comprenant chacun deux entrées séries et une sortie série, une première entrée du circuit 227 étant reliée à la sortie du registre 210, la sortie du circuit 227 étant reliée à chacune des deuxièmes entrées des multiplexeurs 224 et 225, à une borne de sortie 249 et à une quatrième entrée du multiplexeur 248;
- un multiplexeur 250 comprenant deux entrées série et une sortie série, la sortie du multiplexeur 250 étant reliée à une première entrée du circuit 228, une première entrée du multiplexeur 250 étant reliée à la sortie du registre 211 et une deuxième entrée de ce multiplexeur recevant un "0" logique;
- trois circuits d'addition 230, 231 et 251 comprenant chacun deux entrées séries et une sortie série, une première entrée du circuit 230 étant reliée à la sortie du circuit 219 et une deuxième entrée de ce circuit étant reliée à la sortie du circuit de soustraction 228, la sortie du circuit 230 étant reliée d'une part à une deuxième entrée du multiplexeur 248 et d'autre part à une première entrée du circuit 251, la sortie du circuit 231 étant reliée à une première entrée du circuit 229;
- un multiplexeur 252 comprenant deux entrées séries et une sortie série, la sortie du multiplexeur 252 étant reliée à une deuxième entrée du circuit d'addition 251, une première entrée du multiplexeur 252 étant reliée à la sortie du registre 212 et une deuxième entrée de ce multiplexeur recevant un "0" logique;
- un multiplexeur 253 comprenant trois entrées séries et une sortie série, la sortie série du multiplexeur 253 étant reliée à une première entrée du circuit d'addition 231 et une première entrée de ce multiplexeur étant reliée à la sortie du circuit d'addition 251, la troisième entrée du multiplexeur recevant un "0" logique;
- des cellules à retard 232, 233 et 234 pour retarder de k temps de cycle la propagation de données binaires (ces cellules étant typiquement des registres à décalage de k bits, c'est-à-dire de la taille des registres 216, 217 et 218), ces cellules comprenant une entrée série et une sortie série, la sortie de la cellule 232 étant reliée d'une part à une troisième entrée du multiplexeur 248 et d'autre part à l'entrée de la cellule 233, la sortie de la cellule 233 étant reliée à une deuxième entrée du circuit 229, l'entrée de la cellule 234 étant reliée à la sortie du circuit d'addition 251 et la sortie de la cellule 234 étant reliée à une deuxième entrée du multiplexeur 253;
- un circuit 235 de comparaison comprenant deux entrées séries et deux sorties, une première entrée du circuit 235 étant reliée à la sortie du circuit 231 et une deuxième entrée du circuit 235 étant reliée à la sortie du circuit 229;
- deux multiplexeurs 236 et 237 comprenant chacun deux entrées séries, une entrée de sélection, et une sortie série, chacune des premières entrées séries des multiplexeurs 236 et 237 recevant un "0" logique, chacune des entrées de sélection étant reliée à l'une des sorties du circuit 235, la sortie du multiplexeur 236 étant reliée à une deuxième entrée du circuit 227 et la sortie du multiplexeur 237 étant reliée à une deuxième entrée du circuit 228;
- un multiplexeur 238 comprenant deux. entrées séries et une sortie série, une première entrée du multiplexeur 238 recevant un "1" logique, une deuxième entrée du multiplexeur 238 étant reliée à la sortie du registre 212, la sortie du multiplexeur 238 étant reliée d'une part à l'entrée de la cellule 232 et d'autre part à des deuxièmes entrées des multiplexeurs 236 et 237;
- un démultiplexeur 239 comprenant une entrée série et deux sorties séries, l'entrée du démultiplexeur 239 étant reliée à la sortie du circuit 220 et une première sortie du démultiplexeur 239 étant reliée à l'entrée du registre 218;
- une cellule à retard 254 pour retarder de k temps de cycle la propagation de données binaires (ces cellules étant typiquement des registres à décalage de k bits, cette cellule comprenant une entrée série et une sortie série, l'entrée de la cellule 254 étant reliée à une deuxième sortie du démultiplexeur 239;
- un multiplexeur 255 comprenant deux entrées séries et une sortie série, une première entrée du multiplexeur 255 étant reliée à la deuxième sortie du démultiplexeur 239, une deuxième entrée du multiplexeur 255 étant reliée à la sortie de la cellule 254 et la sortie du multiplexeur 255 étant reliée à une deuxième entrée du circuit d'addition 231;

- un multiplexeur 256 comprenant deux entrées séries et une sortie série, une première entrée du multiplexeur 256 étant reliée à la sortie du circuit d'addition 251, c'est-à-dire à la sortie du deuxième des deux circuits d'addition 230 et 251 montés en série, une deuxième entrée du multiplexeur 256 étant reliée à la sortie du circuit d'addition 231, la sortie de ce multiplexeur étant reliée à des troisièmes entrées des multiplexeurs 213 et 215 et à une deuxième entrée du multiplexeur 214;
- deux bornes de sortie 257 et 258 reliées respectivement aux sorties des registres 211 et 212.

Cet exemple de coprocesseur 4b réalisé conformément à l'invention peut subir des modifications sans qu'on sorte du cadre de l'invention.

En ce qui concerne les bornes de sortie et d'entrée, on peut choisir d'utiliser des bornes distinctes mais celles-ci pourront être aussi une ou des bornes d'entrée/sortie communes à plusieurs éléments du coprocesseur. En utilisant des bornes distinctes, un avantage est de pouvoir recevoir et/ou fournir des données depuis et/ou à des éléments extérieurs au coprocesseur (tels que le processeur de traitement 2 par exemple) en parallèle.

D'autre part, en ce qui concerne certains des éléments du coprocesseur 4b, la description ci-dessus doit aussi être comprise comme étant une description plus fonctionnelle que structurelle. En d'autres termes, les multiplexeurs pourront être regroupés entre eux et comporter alors un nombre d'entrées, de sorties, et d'entrées de sélection plus importants. En ce qui concerne les multiplexeurs 225, 236, 237, 240, 250, 252 et 253 qui ont une entrée recevant un signal fixe ("0" ou "1" logique), on pourra les incorporer fonctionnellement aux circuits 219, 227, 228, 230 et 251 si ceux-ci comprennent une entrée de commande permettant d'imposer un état logique sur une de leurs entrées.

Le registre 240 permet de stocker dans le coprocesseur un opérande A de n bits, ce qui permet de limiter les échanges entre le coprocesseur et l'extérieur et d'obtenir en conséquence un gain de temps. Le multiplexeur 246 permet de charger le registre 217 avec des bits fournis par le registre 240, ce qui permet d'utiliser en parallèle les circuits d'addition 219 et 220 sans nécessiter de chargements successifs des registres 216 et 217 avec des mots fournis au coprocesseur.

On peut éventuellement se passer du registre 240 et du multiplexeur 246, et charger en parallèle- depuis l'extérieur des mots de k bits, afin de mettre en oeuvre un fonctionnement en parallèle des circuits de multiplication 219 et 220.

Le multiplexeur 241 permet, en rebouclant la sortie du registre 240 sur son entrée, de garder en permanence intact le contenu de ce registre, lorsque l'on fournit par décalage des mots en sortie de ce registre.

On remarque que l'on peut placer le multiplexeur 250 entre la sortie du circuit de soustraction 228 et la première entrée du circuit d'addition 230 tout en gardant une fonction analogue.

La quatrième entrée du multiplexeur 248 peut être reliée directement à la sortie du registre 210 (ce qui est équivalent, d'un point de vue fonctionnel, à la relier à la sortie du circuit de soustraction 227, si ce dernier reçoit sur sa deuxième entrée un zéro logique en permanence).

Le circuit d'addition 251 et le multiplexeur 252 permettent de mettre en oeuvre des opérations du type A * B + C + D, les données C et D étant fournies par les registres 211 et 212. Le circuit d'addition 251 devient transparent lorsque l'on positionne le multiplexeur 252 pour fournir en permanence le "0" logique sur sa sortie.

On notera que l'on peut placer le circuit d'addition 251 entre la sortie du circuit de multiplication 219 et la première entrée du circuit d'addition 230, et relier la première entrée du multiplexeur 256 à la sortie du circuit d'addition 230. On peut également placer le circuit d'addition 251 entre la sortie du registre 211 et la deuxième entrée du circuit d'addition 230. De même que précédemment, on relie alors la première entrée du multiplexeur 256 à la sortie du circuit d'addition 230. On peut également placer le circuit d'addition 251 entre la sortie du multiplexeur 253 et la première entrée du circuit d'addition 231. On peut encore placer le circuit d'addition 251 en aval du circuit d'addition 231.

Le multiplexeur 253 permet de relier la sortie du circuit d'addition 251 directement à la première entrée du circuit d'addition 231, sans retarder le transfert de données entre ces circuits par le biais de la cellule à retard 234. Il permet aussi de fournir des zéros logiques au circuit d'addition 231. On peut éventuellement utiliser un multiplexeur à deux entrées et ne pas contourner la cellule à retard 234 mais cela se fait au détriment du temps de calcul, du fait de la traversée systématique de cette cellule à retard 234. On peut aussi remplacer fonctionnellement, lors des opérations, la troisième entrée du multiplexeur 253 par une sélection des premières entrées des multiplexeurs 225 et 237 et des deuxièmes entrées des multiplexeurs 250 et 252, de sorte que la première entrée du multiplexeur 253 reçoive alors des "0" logiques.

La cellule à retard 254 permet de retarder de k temps de cycle le flux des bits produits par le circuit de multiplication 220.

On peut ainsi additionner des bits produits par les circuits de multiplication 219 et 220 sans tenir compte des k premiers bits fournis par le circuit de multiplication 219 lors d'une opération.

Si on ne court-circuite pas la cellule à retard 234 par le biais du multiplexeur 253, on doit modifier la cellule 254 afin d'obtenir un retard de 2 * k temps de cycle.

Le multiplexeur 256 permet de mémoriser dans l'un des registres 210 à 212 les bits produits par le circuit d'addition 230.

Le multiplexeur 256 peut également être supprimé à condition de neutraliser le circuit d'addition 231 en envoyant des "0" sur sa deuxième entrée via le multiplexeur 255 et le circuit de multiplication 248.

Par ailleurs, pour l'invention, on préfère utiliser comme registres à décalage 210, 211, 212 et 240 des registres de taille variable agencés en banque de registres comme représenté sur la figure 3 pour le registre 240.

Le registre 240 est constitué de m sous-registres 240-1 à 240-m qui sont des registres à décalage de k bits ayant chacun une entrée série et une sortie série. Les entrées sont connectées ensemble pour former l'entrée du registre 240. Un multiplexeur MUX disposant de m entrées séries et d'une sortie série a chacune de ses entrées respectivement connectées à chaque sortie des sous-registres 240-1 à 240-m. Afin de simplifier le schéma, les registres 210, 211 et 212 ont été représentés en un seul bloc bien qu'ils soient de la même structure que le registre 240 c'est-à-dire divisés chacun en m sous-registres respectivement 210-1 à 210-m, 211-1 à 211-m, 212-1 à 212-m.

Lorsque l'on désire sortir un mot de m * k par exemple du registre 211, il suffit de sortir un premier mot de k bits du sous-registre 211-1 puis un deuxième mot de k bits du sous-registre 211-2 et ainsi de suite jusqu'au $m^{ième}$ mot de k bits du sous-registre 211-m. Pour enregistrer un mot de m * k bits on range un premier mot de k bits dans le sous-registre 211-1 puis un deuxième mot de k bits dans le sous-registre 211-2 et ainsi de suite jusqu'au $m^{ième}$ mot de k bits dans le sous-registre 211-m. Il est toutefois possible d'envisager de ranger les mots dans un ordre différent. Il est possible également de n'adresser qu'un seul des sous-registres 211-1 à 211-m de manière indépendante.

Si par contre on travaille avec des mots de taille m' * k bits avec m' < m soit on utilise une partie des sous-registres de manière fixe par exemple les sous-registres 211-1 à 211-m' ou 211-j à 211-m avec j = 1 + m - m', soit on utilise la totalité des registres de manière aléatoire.

L'utilisation d'une banque de registres permet en outre d'avoir au plus 2 * k cellules de registre qui travaillent simultanément soit une consommation divisée par m / 2 lorsque l'on travaille avec des mots de m * K bits.

Pour mettre en oeuvre l'opération S = A * B mod $2^{Bt}$, A, B et S étant codés sur Bt bits, Bt étant au plus égal à m * k bits avec le coprocesseur 4b, on manipule les opérandes A, B et S en les divisant en m sous-opérandes de k bits : $A_{m-1}...A_0$, $B_{m-1}...B_0$, $S_{m-1}...S_n$, l'indice 0 désignant le mot de poids le plus faible et l'indice m-1 désignant le mot de poids le plus fort. On notera que A et B pourront avoir en pratique des tailles différentes. On suppose ici, pour simplifier, que A et B ont la même taille et que m est pair. On procède de la manière suivante:

A') première initialisation:

on charge A dans le registre 240, $A_0$ étant par exemple dans le sous-registre 240-1 et $A_{m-1}$ étant par exemple dans le sous-registre 240-m, on charge B dans le registre 210, $B_0$ étant par exemple dans le sous-registre 210-1 et $B_{m-1}$ étant par exemple dans le sous-registre 210-m, on initialise à zéro le registre 211 c'est à dire tous les sous-registres 211-1 à 211-m, on charge $A_0$ dans le registre 221 par l'intermédiaire du registre 216, on charge $A_1$ dans le registre 222 par l'intermédiaire du registre 217, on positionne de manière fixe les multiplexeurs 236, 237 et 252 de manière à obtenir un "0" logique en sortie afin de neutraliser les circuits de soustraction 227 et 228 et d'addition 251, on positionne le multiplexeur 253 de manière fixe pour relier en permanence à sa sortie la sortie du circuit d'addition 251, on initialise les circuits d'addition 230 et 231 et de multiplication 219 et 220 et la cellule à retard 254;

B') première itération

B'1) on effectue de manière successive des décalages de k bits aux contenus des sous-registres 210-1 à 210-m pour réaliser $A_0$ * B dans le circuit de multiplication 219 et pour réaliser $A_1$ * B dans le circuit de multiplication 220. Pendant les décalages on additionne dans le circuit d'addition 231 les bits sortant du circuit de multiplication 219 avec les bits sortant du circuit de multiplication 220 qui ont été retardés de k cycles d'horloge pour obtenir en sortie du circuit d'addition 231 $A_1A_0$ * B. Les m premiers mots de k bits sortant du circuit d'addition 231 et correspondant à un résultat intermédiaire noté $R_0$ sont stockés dans le registre 211, $R_0$ étant décomposable en m mots de k bits $R_{0,m-1}$, $R_{0,m-2}$, ..., $R_{0,0}$, chaque mot de $R_0$ étant stocké dans l'un des m sous-registres 211-1 à 211-m, le mot $R_{0,0}$ correspondant au mot $S_0$ étant placé dans le sous-registre 211-1 et le mot $R_{0,1}$ correspondant au mot $S_1$ étant placé dans le sous-registre 211-2, et l'entrée du registre 210 étant bouclée sur sa sortie afin de conserver B dans le registre 210;

B'2) on charge à partir du registre 240 le mot $A_2$ dans le registre 216 et le mot $A_3$ dans le registre 217 pendant le déroulement de l'étape B'1;

C') autres itérations: répétition des étapes C'1 à C'3 (m/2)-1 fois avec i un indice variant de 1 à (m/2)-1:

C'1) on charge le mot $A_{2*i}$ dans le registre 221 et le mot $A_{2*i+1}$ dans le registre 222, on initialise les circuits d'addition 230 et 231 et de multiplication 219 et 220;

C'2) on effectue de manière successive des décalages de k bits aux contenus des sous-registres 210-1 à 210-j (j un entier égal à m - 2 * i) pour réaliser $A_{2*i}$ * $B_{m-1-2*i}...B_0$ dans le circuit de multiplication 219 et pour réaliser $A_{2*i-1} * B_{m-1-2*i}...B_0$ dans le circuit de multiplication 220. Simultanément, on effectue de manière successive des décalages de k bits aux contenus des sous-registres 211-h (h un entier égal à 2 * i + 1) à 211-m pour additionner, dans le circuit d'addition 230, $R_{i-1,m-2*i+1}...R_{i-1,2}$ au résultat sortant du circuit de multiplication 219. On additionne, dans le circuit d'addition 231, les bits sortant du circuit d'addition 230 avec les bits sortant du circuit de multiplication 220 qui ont été retardés de k cycles d'horloge pour obtenir en sortie du circuit d'addition 231 $A_{2*i+1}A_{2*i} * B_{m-1-2*i}...B_0 + R_{i-1,m-2*i+1}...R_{i-1,2}$. Les m - 2 * i premiers mots de k bits sortant du circuit d'addition 231, correspondant à un résultat intermédiaire noté $R_i$, sont stockés dans le registre 211, $R_i$ étant décomposable en m - 2 * i mots de k bits $R_{i,m-2*i+1}$, ..., $R_{i,0}$, chaque mot de $R_i$ étant stocké dans l'un des m - 2 * i sous-registres 211-h à 211-m, le mot $R_{i,0}$ correspondant au mot $S_{2*i}$ étant placé dans le sous-registre 211-h et le mot $R_{i,1}$ correspondant au mot $S_{2*i+1}$ étant placé dans le sous-registre 211-(h+1), et l'entrée du registre 210 étant bouclée sur sa sortie afin de conserver B dans le registre 210;

C'3) on charge à partir du registre 240 le mot $A_{2*i+2}$ dans le registre 216 et le mot $A_{2*1+3}$ dans le registre 217 pendant le déroulement de l'étape C'2 (excepté lorsque i est égal à (m/2)-1) ;

D') on peut disposer de S = A * B mod $2^{m*k}$ qui est contenu dans le registre 211 à l'issu de la réalisation des étapes précédentes.

Dans le cas où les données A et B ne sont pas d'une même taille multiple de k, on complète le poids fort de ces données par des "0" pour obtenir deux nombres de taille identique. On peut utiliser seulement une partie des registres 240, 210 et 211 lorsque A et B sont d'une taille m' * k bits < m * k bits pour traiter des mots de taille inférieure, on utilisera alors le même procédé avec des registres de taille m' * k bits au lieu de m * k bits en remplaçant m par m' dans le procédé décrit précédemment. Lorsque le nombre de mots de A et de B est impair on peut se ramener à un cas où le nombre de mots est pair par l'ajout de "0" en poids fort.

Si par contre on travaille avec un nombre de sous-registres m impair, on effectue l'étape C' en faisant varier i de 1 à (m-1)/2+1 et en ajoutant l'étape C''2 juste avant l'étape D':

C''2) on effectue un décalage de k bits au contenu du sous-registre 210-1 pour réaliser $A_{m-1} *. B_0$ dans le circuit de multiplication 219, on effectue simultanément un décalage de k bits au contenu du sous-registre 211-m pour additionner dans le circuit d'addition 230 $R_{(m-1)/2-1,2}$ au résultat sortant du circuit de multiplication 219 pour obtenir $A_{m-1} * B_0 + R_{(m-1)/2-1,2}$ le premier mot ce k bits sortant du circuit d'addition 230 correspondant à $S_{m-1}$ est stocké dans le sous-registre 211-m.

L'utilisation des deux circuits de multiplication 219 et 220 permet de diviser par deux le nombre d'itérations nécessaire par rapport au circuit de la figure 2.

Les registres de taille variable utilisés permettent de réduire la durée de chaque itération en fonction du nombre de mots de k bits de S obtenu lors de chaque itération du procédé. Pour que l'effet soit obtenu, il suffit que les registres 210 et 211 soient de taille variable.

Le registre 240 permet de mémoriser A en entier afin de supprimer les échanges entre la mémoire 3 et le coprocesseur 4 pendant le déroulement du calcul. Par ailleurs, la donnée contenue dans le registre 240 peut être réutilisée si le registre a été rebouclé sur luimême. L'utilisation du registre 240 est partiellement compensé en terme de surface dans la mesure où cela permet de réduire la taille de la mémoire 3.

Comme expliqué précédemment les améliorations peuvent être utilisées de manière indépendante sans sortir du cadre de l'invention. De même, de nombreuses modifications structurelles sont possibles sans changer le caractère fonctionnel du coprocesseur et donc sans sortir du cadre de l'invention.

**Revendications**

1. Procédé de mise en oeuvre d'une opération modulaire du type S = A * B mod $2^{m*k}$, A, B et S étant codés sur au plus m mots de k bits, m et k étant des entiers supérieurs à 1, procédé au cours duquel on mémorise B dans un premier registre (110, 210) de m * k bits,

   le procédé étant caractérisé en ce qu'ensuite on répète successivement une étape de calcul comportant quatre sous-étapes :

   - on mémorise un mot ($A_i$, $A_{2*i}$) de k bits de A dans un deuxième registre (121, 221) de k bits;.
   - on effectue, dans un premier circuit de multiplication (119, 219) connecté aux premier et deuxième registres (110, 121, 210, 221), une première multiplication de B par le mot ($A_i$, $A_{2*i}$) de A mémorisé dans le deuxième registre (121, 221), le mot de A contenu dans le deuxième registre (121, 221) étant changé lors de chaque multiplication;
   - on calcule un résultat intermédiaire ($R_i$) par addition, dans un premier circuit d'addition (130, 230), des mots

de poids forts ($R_{i-1, \, m-i}...R_{i-1,1}$, $R_{i-1,m-2*i+1}...R_{i-1,2}$) d'un précédent résultat intermédiaire ($R_{i-1}$) aux mots de poids faibles du résultat de la première multiplication de B par le mot de A; et

- on mémorise le résultat intermédiaire ($R_i$) dans un troisième registre (111, 211) de m * k bits contenant des mots de S précédemment mémorisés, le mot de poids le plus faible ($R_{i,0}$) du résultat intermédiaire ($R_i$) correspondant à un mot ($S_i$) du résultat S.

2. Procédé selon la revendication 1, caractérisé en ce que l'étape de calcul est effectuée m fois, en ce que le résultat intermédiaire $R_i$ est égal aux (m-i) mots de poids faibles du résultat de l'opération $A_i * B_{m-1-i} ...B_0 + (R_{i-1} \setminus 2^k)$, i étant un indice entier variant entre 0 et m-1, $A_i$ étant le mots de k bits de poids i de A, $B_{m-i-1}...B_0$ correspondant aux m - i mots de poids faible de B, et $R_{-1}$ étant égal à zéro,

et en ce que à l'issue de la i$^{\text{ième}}$ réalisation de l'étape de calcul, le troisième registre (111, 211) contient d'une part les i + 1 mots de k bits de poids faible ($S_i$, ..., $S_0$) du résultat S et d'autre part les m - i mots ($R_{i, \, m-i-1}$, ..., $R_{i,0}$) du résultat intermédiaire ($R_i$), les mots $S_i$ et $R_{i,0}$ étant un seul et même mot.

3. Procédé selon la revendication 1, caractérisé en ce que l'étape de calcul comprend en outre les sous-étapes suivantes :

- on mémorise dans un quatrième registre (222) de k bits, un mot ($A_{2*i+1}$) de A de poids immédiatement supérieur au poids du mot ($A_{2*i}$) de A mémorisé dans le deuxième registre 221;
- on effectue, dans un deuxième circuit de multiplication (220) connecté aux deuxième et quatrième registres (210, 222), une deuxième multiplication de B par le mot ($A_{2*i+1}$) de A mémorisé dans le quatrième registre (222), le mot de A contenu dans le quatrième registre (222) étant changé lors de chaque deuxième multiplication;
- on additionne, dans un deuxième circuit d'addition (231), le résultat sortant du deuxième circuit de multiplication (220) retardé de k cycles d'horloge, avec le résultat sortant du premier circuit d'addition (230) pour obtenir le résultat intermédiaire ($R_i$) avant la mémorisation de ce résultat intermédiaire dans le troisième registre (211).

4. Procédé selon l'une des revendications 1 à 3, caractérisé en ce que l'on fait varier la taille des deuxième et troisième registres (110, 111, 210, 211) entre chaque nouvelle multiplication effectuée par le premier circuit de multiplication (119, 219).

5. Procédé selon l'une des revendications 3 ou 4, caractérisé en ce que l'on effectue m/2 fois l'étape de calcul, réalisant ainsi m/2 multiplications successives dans chacun des premier et deuxième circuits de multiplication (219, 220),

en ce que le résultat intermédiaire ($R_i$) est égal aux m-2*i mots de poids faibles du résultat de l'opération $A_{2*i+1}A_{2*i} * B_{m-1-2*i}...B_0 + (R_{i-1} \setminus 2^{2*k})$, i étant un indice entier variant de 0 à m/2, $A_{2*i}$ et $A_{2*i+1}$ étant les mots de k bits de poids 2*i et 2*i+1 de A, $B_{m-1-2*i}...B_0$ correspondant aux m - 2 * i mots de poids faible de B, et $R_{-1}$ étant égal à zéro,

et en ce que, à l'issue de la i$^{\text{ième}}$ réalisation de l'étape de calcul, le troisième registre (211) contient d'une part les 2 * i + 2 mots de k bits de poids faible de S et d'autre part les m - 2 * i mots du résultat intermédiaire ($R_i$), les mots $S_{2*i+1}$ et $R_{i,1}$ étant un seul et même mot, les mots $S_{2*i}$ et $R_{i,0}$ étant un seul et même mot.

6. Procédé selon l'une des revendications 1 à 5, caractérisé en ce que l'on mémorise préalablement A dans un cinquième registre (240) à décalage de m * k bits pour pouvoir fournir au premier ou au quatrième registre (221, 222) les mots de k bits de A à charger dans ledit premier ou quatrième registre (221, 222).

7. Coprocesseur d'arithmétique modulaire (4, 4b) comportant un circuit de mise en oeuvre d'une opération modulaire du type $S = A * B \bmod 2^{m*k}$, A, B et S étant codés sur au plus m mots de k bits, m et k étant des entiers supérieurs à 1, le circuit de mise en oeuvre comportant:

- un premier registre (110, 210) de m * k bits pour mémoriser B;
    le coprocesseur étant caractérisé en ce que le circuit de mise en oeuvre comprend également :
- un deuxième registre (121, 221) de k bits pour mémoriser un mot de A de k bits;
- un premier circuit de multiplication (119, 219) connecté aux premier et deuxième registres (110, 121, 210, 221) pour effectuer une première multiplication de B par le mot de A mémorisé dans le deuxième registre (121, 221) ;
- des moyens (116, 124, 154, 216, 224) pour changer le mot de A contenu dans le deuxième registre (121, 221) lors de la multiplication;

- un premier circuit d'addition (130, 230) pour calculer un résultat intermédiaire ($R_i$) par addition des mots de poids forts d'un précédent résultat intermédiaire ($R_{i-1}$) aux mots de poids faibles du résultat de la première multiplication de B par le mot de A; et

- un troisième registre (111, 211) de m * k bits pour mémoriser le résultat intermédiaire ($R_1$) avec des mots du résultat S précédemment mémorisés, le mot de poids le plus faible ($R_{i,0}$) du résultat intermédiaire ($R_i$) correspondant à un mot ($S_i$) du résultat S.

8.  Coprocesseur selon la revendication 7, caractérisé en ce que le circuit de mise en oeuvre comporte également :

- un quatrième registre (222) de k bits pour mémoriser un mot de k bits de A;
- un deuxième circuit de multiplication (220) connecté aux deuxième et quatrième registres (210, 222) pour effectuer une deuxième multiplication de B par le mot de A mémorisé dans le quatrième registre (222);
- des moyens (217, 223, 246) pour changer le mot de A contenu dans le quatrième registre (222) lors de la deuxième multiplication;
- un deuxième circuit d'addition (231) pour additionner le résultat sortant du deuxième circuit de multiplication (220) retardé de k cycles d'horloge avec le résultat sortant du premier circuit d'addition (230) avant la mémorisation dans le troisième registre (210).

9.  Coprocesseur selon l'une des revendications 7 ou 8, caractérisé en ce que les deuxième et troisième registres (110, 111, 210, 211) sont de taille variable, et en ce que leur taille varie pendant la mise en oeuvre d'une opération modulaire du type $S = A * B \bmod 2^{m*k}$.

10. Coprocesseur selon l'une des revendications 7 à 9, caractérisé en ce que le circuit de mise en oeuvre comporte également un cinquième registre (240) à décalage de m * k bits pour pouvoir fournir au premier ou au quatrième registre (221, 222) les mots de k bits de A à charger dans ledit premier ou quatrième registre (221, 222).

11. Circuit intégré (1) mettant en oeuvre des opérations modulaires selon la méthode de Montgomery comportant un processeur (2), une mémoire (3) et caractérisé en ce qu'il comporte le coprocesseur (4, 4b) de l'une des revendications 7 à 10.


**Claims**

1.  Method of performing a modular operation of the type $S = A * B \bmod 2^{m*k}$, A, B and S being coded in no more than m words of k bits, m and k being integers greater than 1, a method during which B is stored in a first register (110, 210) of m * k bits,
    the method being characterised in that a calculation step including four sub-steps is next repeated successively:

- a word ($A_i$, $A_{2*i}$) of k bits of A is stored in a second k-bit register (121, 221);
- there is performed, in a first multiplication circuit (119, 219) connected to the first and second registers (110, 121, 210, 221), a first multiplication of B by the word ($A_i$, $A_{2*i}$) of A stored in the second register (121, 221), the word of A contained in the second register (121, 221) being changed at the time of each multiplication;
- an intermediate result ($R_i$) is calculated by the addition, in a first addition circuit (130, 230), of the most significant words ($R_{i-1,\ m-i}$... $R_{i-1,1}$, $R_{i-1,m-2*i+1}$...$R_{i-1,2}$) of a previous intermediate result ($R_{i-1}$) to the least significant words of the result of the first multiplication of B by the word of A; and
- the intermediate result ($R_i$) is stored in a third register (111, 211) of m * k bits containing previously stored words of S, the least significant word ($R_{i,0}$) of the intermediate result ($R_i$) corresponding to a word ($S_i$) of the result S.

2.  Method according to Claim 1, characterised in that the calculation step is performed m times, in that the intermediate result $R_i$ is equal to the (m-i) least significant words of the result of the operation $A_i * B_{m-1-i}$... $B_0 + (R_{i-1} \setminus 2^k)$, i being an integer index varying between 0 and m-1, $A_i$ being the k-bit word of significance i of A, $B_{m-1-i}$...$B_0$ corresponding to the m - i least significant words of B, and $R_{-1}$ being equal to zero,
    and in that, at the end of the $i^{th}$ performance of the calculation step, the third register (111, 211) contains on the one hand the i + 1 least significant k-bit words ($S_i$, ..., $S_0$) of the result S and on the other hand the m - i words ($R_{i,\ m-i-1}$, ..., $R_{i,0}$) of the intermediate result ($R_i$), the words $S_i$ and $R_{i,0}$ being one and the same word.

3. Method according to Claim 1, characterised in that the calculation step also comprises the following sub-steps:

   - there is stored, in a fourth k-bit register (222), a word ($A_{2*i+1}$) of A of significance immediately greater than the significance of the word ($A_{2*i}$) of A stored in the second register 221;
   - there is performed, in a second multiplication circuit (220) connected to the second and fourth registers (210, 222), a second multiplication of B by the word ($A_{2*i+1}$) of A stored in the fourth register (222), the word of A contained in the fourth register (222) being changed at the time of each second multiplication;
   - there is added, in a second addition circuit (231), the result emerging from the second multiplication circuit (220) delayed by k clock cycles, with the result emerging from the first addition circuit (230), in order to obtain the intermediate result ($R_i$) before this intermediate result is stored in the third register (211).

4. Method according to one of Claims 1 to 3, characterised in that the size of the second and third registers (110, 111, 210, 211) is made to vary between each new multiplication performed by the first multiplication circuit (119, 219).

5. Method according to one of Claims 3 or 4, characterised in that the calculation step is performed m/2 times, thus performing m/2 successive multiplications in each of the first and second multiplication circuits (219, 220),

   in that the intermediate result ($R_i$) is equal to the m-2*i least significant words of the result of the operation $A_{2*i+1}A_{2*i} * B_{m-1-2*i}...B_0 + (R_{i-1} \setminus 2^{2*k})$, i being an integer index varying from 0 to m/2, $A_{2*i}$ and $A_{2*i+1}$ being the k-bit words of significance 2*i and 2*i+1 of A, $_{Bm-1-2*i}...B_0$ corresponding to the m - 2 * i least significant words of B, and $R_{-1}$ being equal to zero,
   and in that, at the end of the $i^{th}$ performance of the calculation step, the third register (211) contains on the one hand the 2 * i + 2 least significant k-bit words of S and on the other hand the m - 2 * i words of the intermediate result ($R_i$), the words $S_{2*i+1}$ and $R_{i,1}$ being one and the same word, the words $S_{2*i}$ and $R_{i,0}$ being one and the same word.

6. Method according to one of Claims 1 to 5,
   characterised in that A is first stored in a fifth shift register (240) of m * k bits in order to be able to supply, to the first and/or fourth register (221, 222), the k-bit words of A to be loaded into the said first or fourth register (221, 222).

7. Modular arithmetic coprocessor (4, 4b) containing a circuit for implementing a modular operation of the type S = A * B mod $2^{m*k}$, A, B and S being coded in no more than m words of k bits, m and k being integers greater than 1, the implementation circuit containing:

   - a first register (110, 210) of m * k bits for storing B;
        the coprocessor being characterised in that the implementation circuit also comprises:
   - a second register (121, 221) of k bits for storing a word of A of k bits;
   - a first multiplication circuit (119, 219) connected to the first and second registers (110, 121, 210, 221) for performing a first multiplication of B by the word of A stored in the second register (121, 221);
   - means (116, 124, 154, 216, 224) for changing the word of A contained in the second register (121, 221) at the time of multiplication;
   - a first addition circuit (130, 230) for calculating an intermediate result ($R_i$) by adding the most significant words of a previous intermediate result ($R_{i-1}$) to the least significant words of the result of the first multiplication of B by the word of A; and
   - a third register (111, 211) of m $^*$ k bits for storing the intermediate result ($R_i$) with previously stored words of the result S, the least significant word ($R_{i,0}$) of the intermediate result ($R_i$) corresponding to a word ($S_i$) of the result S.

8. Coprocessor according to Claim 7, characterised in that the implementation circuit also includes:

   - a fourth k-bit register (222) for storing a k-bit word of A;
   - a second multiplication circuit (220) connected to the second and fourth registers (210, 222) for performing a second multiplication of B by the word of A stored in the fourth register (222);
   - means (217, 223, 246) for changing the word of A contained in the fourth register (222) at the time of the second multiplication;
   - a second addition circuit (231) for adding the result emerging from the second multiplication circuit (220) delayed by k clock cycles with the result emerging from the first addition circuit (230) before storage in the third register (210).

9. Coprocessor according to one of Claims 7 or 8, characterised in that the second and third registers (110, 111, 210, 211) are of variable size, and in that their size varies during the performance of a modular operation of the type S = A * B mod $2^{m*k}$.

10. Coprocessor according to one of Claims 7 to 9, characterised in that the implementation circuit also contains a fifth shift register (240) of m * k bits in order to be able to supply to the first or fourth register (221, 222) the k-bit words of A to be loaded into the said first or fourth register (221, 222).

11. Integrated circuit (1) performing modular operations according to the Montgomery method including a processor (2) and a memory (3) and characterised in that it includes the coprocessor (4, 4b) of one of Claims 7 to 10.

**Patentansprüche**

1. Verfahren zum Ausführen einer Modulo-Operation vom Typ S = A B mod $2^{m \cdot k}$, wobei A, B und S durch m Worte von k Bits dargestellt sind und m und k ganze Zahlen größer 1 sind, wobei im Verlauf des Verfahrens B in einem ersten Register (110, 210) mit m k Bits abgespeichert wird, wobei das Verfahren dadurch gekennzeichnet ist, daß man anschließend sukzessive einen Rechenschritt wiederholt, der vier Teilschritte umfaßt:

   - man speichert ein Wort ($A_i$, $A_{2 \cdot i}$) von k Bits aus A in einem zweiten Register (121, 221) ä k Bits,
   - man führt in einem ersten Multiplikatorschaltkreis (119, 219), der mit dem ersten und zweiten Register (110, 121, 210, 221) verbunden ist, eine erste Multiplikation von B mit dem Wort ($A_i$, $A_{2 \cdot i}$) aus A, abgespeichert in dem zweiten Register (121, 221), durch, wobei das Wort aus A in dem zweiten Register (121, 221) bei jeder Multiplikation geändert wird,
   - man berechnet ein Zwischenergebnis ($R_i$) durch Addition in einem ersten Additionsschaltkreis (130, 230) von Worten mit hohem Gewicht ($R_{i-1, m-i}$ ... $R_{i-1,1}$, $R_{i-1,m-2 \cdot i+1}$ ... $R_{i-1,2}$) eines vorausgehenden Zwischenergebnisses ($R_{i-1}$) zu Worten niedrigen Gewichts des Ergebnisses der ersten Multiplikation von B mit dem Wort A und
   - man speichert das Zwischenergebnis ($R_i$) in einem dritten Register (111, 211) à m k Bits ab, das die Worte aus S enthält, die vorher abgespeichert wurden, wobei das Wort mit dem geringsten Gewicht ($R_{i,0}$) des Zwischenergebnisses (Ri) einem Wort (Si) des Ergebnisses S entspricht.

2. Verfahren nach Anspruch 1, dadurch gekennzeichnet, daß der Rechenschritt m-mal durchgeführt wird, daß das Zwischenergebnis $R_i$ gleich (m-i) Worten mit geringem Gewicht des Ergebnisses der Operation $A_i \cdot B_{m-l-i}$ ... $B_0$ + ($R_{i-l} \setminus 2^k$) ist, wobei i ein ganzzahliger Index zwischen 0 und m-l ist und $A_i$ die Worte mit k Bits mit dem Gewicht i aus A sind und $B_{m-l}$ ... $B_0$ den m-i Worten mit niedrigem Gewicht aus B entsprechen und $R_{-1}$ gleich Null ist, und daß bei Beginn der i-ten Ausführung des Rechenschritts das dritte Register (111, 211) einerseits die i+1 Worte ä k Bits mit niedrigem Gewicht ($S_i$, ... $S_0$) des Ergebnisses S und andererseits die m-i Worte ($R_{i,m-i-1}$, ... $R_{i,0}$) des Zwischenergebnisses ($R_i$) enthält, wobei die Worte $S_i$ und $R_{i,0}$ ein und dasselbe Wort sind.

3. Verfahren nach Anspruch 1, dadurch gekennzeichnet, daß der Rechenschritt außerdem die folgenden Teilschritte umfaßt:

   - man speichert in einem vierten Register (222) ä k Bits ein Wort ($A_{2 \cdot i+1}$) aus A ab, dessen Gewicht unmittelbar größer als das Gewicht des Wortes ($A_{2 \cdot i}$) aus A ist, das in dem zweiten Register (221) abgespeichert wurde;
   - man führt in einem zweiten Multiplikatorschaltkreis (220), der mit dem zweiten und vierten Register (210, 222) verbunden ist, eine zweite Multiplikation von B mit dem Wort ($A_{2 \cdot i+1}$) aus A durch, das in dem vierten Register (222) abgespeichert wurde, wobei das Wort aus A in dem vierten Register (222) bei jeder zweiten Multiplikation geändert wird;
   - man addiert in einem zweiten Additionsschaltkreis (231) das Ergebnis, das von dem zweiten Multiplikatorschaltkreis (220) ausgegeben wird, welches um k Taktzyklen verzögert ist, zu dem Ergebnis, daß von dem ersten Additionsschaltkreis (230) ausgegeben wurde, um das Zwischenergebnis (Ri) vor dem Abspeichern dieses Zwischenergebnisses in dem dritten Register (211) zu erhalten.

4. Verfahren nach einem der Ansprüche 1 bis 3, dadurch gekennzeichnet, daß man die Größe des zweiten und dritten Registers (110, 111, 210, 211) zwischen jeder neuen Multiplikation variieren läßt, die durch den ersten Multiplikatorschaltkreis (119, 219) durchgeführt wird.

5. Verfahren nach einem der Ansprüche 3 oder 4, dadurch gekennzeichnet, daß man den Rechenschritt m/2-mal durchführt, wobei so m/2 aufeinanderfolgende Multiplikationen sowohl in dem ersten als auch in dem zweiten Multiplikatorschaltkreis (219, 220) durchgeführt werden,

daß das Zwischenergebnis (Ri) gleich m - 2 i Worte niedrigen Gewichtes des Ergebnisses der Operation $A_{2 \cdot i+1} A_{2 \cdot i} \cdot B_{m-1-2 \cdot i} ... B_0 + (R_{i-1} \setminus 2^{2 \cdot k})$ ist, wobei i ein ganzzahliger Index zwischen Null und m/2 ist und $A_{2 \cdot i}$ und $A_{2 \cdot i+1}$ die Worte ä k Bits mit dem Gewicht $2 \cdot i$ und $2 \cdot i + 1$ aus A sind und $B_{m-1-2 \cdot i} ... B_0$ den m - 2 · i Worten niedrigen Gewichts aus B entsprechen und $R_{-l}$ gleich Null ist,
und daß am Beginn der i-ten Durchführung des Rechenschritts das dritte Register (211) einerseits die x · i + 2 Worte ä k Bits niedrigen Gewichts aus S und andererseits die m - 2 · i Worte des Zwischenergebnisses ($R_i$) beinhalten, wobei die Worte $S_{2 \cdot i+1}$ und $R_{i,1}$ ein und dasselbe Wort sind und die Worte $S_{2 \cdot i}$ und $R_{i,0}$ ein und dasselbe Worte sind.

6. Verfahren nach einem der Ansprüche 1 bis 5, dadurch gekennzeichnet, daß man vorher A vorab in einem fünften Schieberegister (240) ä m · k Bits abspeichert, um an das erste oder an das vierte Register (221, 222) die Worte ä k Bits aus A auszugeben, damit sie in das erste oder vierte Register (221, 222) geladen werden.

7. Modulo-arithmetischer Koprozessor (4, 4b) mit einem Schaltkreis für das Ausführen einer Modulo-Operation vom Typ S = A · B mod $2^{m \cdot k}$, wobei A, B und S durch höchstens m Worte ä k Bits dargestellt werden und m und k ganze Zahlen größer 1 sind, wobei der Ausführungsschaltkreis umfaßt:

- ein erstes Register (110, 210) mit m · k Bits zum Abspeichern von B,
- wobei der Koprozessor dadurch gekennzeichnet ist, daß der Ausführungsschaltkreis außerdem umfaßt:

  - ein zweites Register (121, 221) von k Bits für das Abspeichern eines Wortes aus A von k Bits,
  - einen ersten Multiplikatorschaltkreis (119, 219), der mit dem ersten und zweiten Register (110, 121, 210, 221) verbunden ist, um eine erste Multiplikation von B mit dem Wort aus A durchzuführen, das in dem zweiten Register (121, 221) abgespeichert ist,
  - Vorrichtungen (116, 124, 154, 216, 224) für das Laden des Wortes aus A in dem zweiten Register (121, 221) bei der Multiplikation,

- einen ersten Additionsschaltkreis (130, 230) für das Berechnen eines Zwischenergebnisses (Ri) durch Addition von Worten großen Gewichts eines vorangehenden Zwischenergebnisses ($R_{i-1}$) zu den Worten geringen Gewichtes des Ergebnisses der ersten Multiplikation von B mit dem Wort aus A, und
- ein drittes Register (111, 211) mit m k Bits für das Abspeichern des Zwischenergebnisses ($R_1$) mit Worten des Ergebnisses S, die vorher abgespeichert wurden, wobei das Wort mit dem geringsten Gewicht ($R_{i,0}$) des Zwischenergebnisses (Ri) einem Wort (Si) des Ergebnisses S entspricht.

8. Koprozessor nach Anspruch 7, dadurch gekennzeichnet, daß der Ausführungsschaltkreis außerdem umfaßt:

- ein viertes Register (222) ä k Bits für das Abspeichern eines Wortes ä k Bits aus A,
- einen zweiten Multiplikatorschaltkreis (220), der mit dem zweiten und vierten Register (210, 222) verbunden ist, um eine zweite Multiplikation von B mit dem Wort aus A durchzuführen, das in dem vierten Register (222) abgespeichert wurde,
- Vorrichtungen (217, 223, 246) für das Laden des Wortes aus A in dem vierten Register (222) bei der zweiten Multiplikation,
- einen zweiten Additionsschaltkreis (231) für das Addieren des Ergebnisses, das von dem zweiten Multiplikatorschaltkreis (220) ausgegeben wurde, verzögert um k Taktzyklen, zu dem Ergebnis, das von dem ersten Additionsschaltkreis (230) ausgegeben wurde, vor dem Abspeichern in dem dritten Register (210).

9. Koprozessor nach einem der Ansprüche 7 oder 8, dadurch gekennzeichnet, daß das zweite und dritte Register (110, 111, 210, 211) eine variable Größe hat und daß ihre Größe beim Ausführen einer Modulo-Operation vom Typ S = A B mod $2^{m \cdot k}$ variiert.

10. Koprozessor nach einem der Ansprüche 7 bis 9, dadurch gekennzeichnet, daß der Ausführungsschaltkreis außerdem ein fünftes Schieberegister (240) mit m k Bits umfaßt, um an das erste oder das vierte Register (221, 222) die Worte ä k Bits aus A für das Laden in das erste oder vierte Register (221, 222) auszugeben.

11. Integrierter Schaltkreis (1) für die Ausführung von Modulo-Operationen nach dem Verfahren von Montgomery mit einem Prozessor (2), einem Speicher (3) und dadurch gekennzeichnet, daß er den Koprozessor (4, 4b) nach einem der Ansprüche 7 bis 10 umfaßt.

# FIG_1

Message clair

PROCESSEUR DE TRAITEMENT

MEMOIRE

COPROCESSEUR ARITHMETIQUE

Message crypté

# FIG_2

EP 0 939 363 B1

FIG_3